# FASCICULE DE BREVET EUROPEEN

(11) **EP 1 314 512 B1**
(45) Date de publication et mention de la délivrance du brevet: **04.04.2007**
(21) Numéro de dépôt: 02292901.2
(22) Date de dépôt: 22.11.2002
(51) Int. Cl.: B23Q 7/14, B23Q 41/02, B23Q 1/00, B23Q 11/00, B23Q 1/48, B23Q 1/54

(54) **Unité de prehension pour l'usinage automatisé de pièces, et dispositif et procédé d'usinage integrant une telle unité**
Greifeinheit für die automatisierte Bearbeitung von Werkstücken, und Vorrichtung und Verfahren mit einer solchen Einheit
Holding unit for the automatic machining of workpieces, and device and procedure incorporating such a device

(30) Priorité: 26.11.2001 FR 0115262
(43) Date de publication de la demande: 28.05.2003
(73) Titulaire: AIRBUS France, 31060 Toulouse (FR)
(72) Inventeur: Lanvin, Hervé, 80800 Bonnay (FR)
(74) Mandataire: Ilgart, Jean-Christophe

(56) Documents cités:
- EP-A- 0 375 009
- EP-A- 0 475 267
- DE-A- 19 805 394
- FR-A- 2 468 795
- FR-A- 2 691 659
- US-A- 4 610 440
- US-A- 4 736 830
- US-A- 5 213 192
- US-B1- 6 205 631
- US-B1- 6 228 007
- PATENT ABSTRACTS OF JAPAN vol. 013, no. 244 (M-834), 7 juin 1989 (1989-06-07) -& JP 01 051251 A (HITACHI SEIKI CO LTD), 27 février 1989 (1989-02-27)
- PATENT ABSTRACTS OF JAPAN vol. 013, no. 122 (M-807), 27 mars 1989 (1989-03-27) -& JP 63 295139 A (NIKKEN KOSAKUSHO:KK), 1 décembre 1988 (1988-12-01)

## Description

### Domaine technique

L'invention a principalement pour objet une unité de préhension permettant de transférer une pièce mécanique à usiner entre au moins une machine-outil et au moins un poste de chargement déchargement, de façon à permettre l'usinage automatisé de ladite pièce sur chacune de ses faces sans nécessiter l'intervention d'un opérateur en cours d'usinage (voir par exemple JP-A-01051251).

L'invention concerne également un dispositif d'usinage intégrant au moins une unité de préhension de ce type, au moins une machine d'usinage et au moins un poste de chargement déchargement.

L'invention concerne en outre un procédé d'usinage susceptible d'être mis en oeuvre par un tel dispositif.

### Etat de la technique

Habituellement, lorsqu'une pièce doit être usinée dans une machine-outil, elle peut être positionnée par un opérateur dans un outillage de préhension spécifique, directement fixé sur le plateau de la machine-outil. La mise en place et le réglage de l'outillage nécessitent un arrêt relativement long de la machine, ce qui est pénalisant en termes de productivité. Cela est d'autant plus pénalisant que l'usinage de toutes les faces de la pièce nécessite le plus souvent au moins un retournement de celle-ci. De plus, lors du retournement de la pièce, il est parfois nécessaire de remplacer l'outillage de préhension par un autre outillage mieux adapté à la nouvelle orientation de la pièce.

Le document FR-A-2 691 659 décrit un outillage de préhension de conception modulaire, permettant de mettre la pièce en place et d'en régler l'orientation en dehors de la machine-outil, par exemple à un poste de chargement. L'outillage de préhension comporte une semelle ou palette constituée d'une plaque rectangulaire prévue pour être fixée sur le plateau de la machine-outil. Un corps vertical, solidaire de cette palette, peut recevoir au moins un module de préhension. Ce module de préhension est choisi parmi différents modules (étaux, pinces, etc.), interchangeables entre eux selon la pièce à usiner.

La pièce à usiner est mise en place sur le module de préhension dans un poste de chargement extérieur à la machine. Le module de préhension est actionné par l'opérateur de façon à brider la pièce dans la position souhaitée. A cet effet, il est alimenté en fluide hydraulique sous pression par le poste de chargement. Le module de préhension comporte un réservoir de fluide hydraulique sous pression qui permet de maintenir le bridage de la pièce lors des phases d'attente et de transfert entre le poste de chargement et la machine-outil.

L'outillage de préhension proposé dans le document FR-A-2 691 659 permet de mettre les pièces en place à l'avance, sans nécessiter un long arrêt de la machine. Toutefois, lorsque la pièce doit être retournée pour usiner certaines de ses faces, l'outillage de préhension doit être ramené au poste de chargement afin qu'un opérateur procède à ce retournement et, si nécessaire, au remplacement du module de préhension. Cela est pénalisant en termes de productivité et de durée de fabrication de la pièce. En effet, la machine-outil est arrêtée pendant l'enlèvement et la remise en place de l'outillage. De plus, l'intervention d'un opérateur est nécessaire.

### Exposé de l'invention

L'invention a principalement pour objet une unité de préhension dont la conception originale permet d'usiner l'ensemble des faces d'une pièce mécanique, de façon automatisée, sans nécessiter l'intervention d'un opérateur ni le retour à un poste de chargement.

Conformément à l'invention, cet objectif est atteint au moyen d'une unité de préhension apte à être transférée entre au moins une machine-outil et au moins un poste de chargement déchargement, pour permettre l'usinage automatisé d'au moins une pièce, l'unité de préhension comprenant une palette et des moyens de préhension de ladite pièce, montés sur la palette, des moyens d'orientation, par lesquels les moyens de préhension sont montés sur la palette, des moyens de commande, aptes à actionner les moyens d'orientation, en réponse à des signaux de commande en provenance de la machine-outil, et étant caractérisée en ce qu'elle comprend de plus des moyens d'appui, montés sur la palette par d'autres moyens d'orientation..

Dans une telle unité de préhension, le dispositif de commande contrôle notamment la position et les mouvements des moyens d'orientation par lesquels les moyens de préhension sont montés sur la palette. Ce contrôle est effectué de façon locale et autonome, en fonction des consignes en provenance de la machine-outil. La pièce peut donc être usinée successivement sur chacune de ses faces sans qu'il soit nécessaire de ramener l'unité de préhension au poste de chargement déchargement. Un usinage complet automatisé est ainsi possible sans accroître la charge de travail confiée au dispositif de commande qui équipe la machine-outil.

Dans un mode de réalisation préféré de l'invention, les moyens de commande sont également aptes à actionner les moyens de préhension. Ainsi, le bridage du bloc de matière à usiner et le démontage de la pièce usinée peuvent être effectués de façon automatisée au poste de chargement déchargement.

Selon ce mode de réalisation préféré, au moins un bâti est fixé sur la palette et un plateau rotatif est monté sur le bâti et forme les moyens d'orientation. Les moyens de préhension sont alors montés sur le plateau rotatif.

Les moyens d'appui comprennent de préférence au moins une surface apte à être appliquée sur la pièce, ladite surface étant réalisée en un matériau absorbant les vibrations. Par ailleurs, les autres moyens d'orientation comprennent un autre bras rotatif monté sur la palette.

Dans le mode de réalisation préféré de l'invention, les moyens de préhension sont interchangeables.

Avantageusement, la palette comprend une partie mobile en rotation autour d'un axe perpendiculaire à une face de plus grande surface de la palette, les moyens de préhension étant montés sur ladite partie mobile. Cet agencement procure un degré d'orientation supplémentaire qui facilite, dans certains cas, l'usinage du bloc de matière sur toutes ses faces.

Dans un mode de réalisation particulier, l'unité de préhension comprend de plus des premiers moyens de connexion, aptes à être automatiquement raccordés sur des deuxièmes moyens de connexion montés sur la machine-outil lorsque l'unité modulaire est reçue dans la machine-outil.

Avantageusement, l'unité modulaire comprend alors également des troisièmes moyens de connexion, reliés d'une part aux premiers moyens de connexion et d'autre part aux moyens d'orientation et aux moyens de commande.

De façon générale, les moyens de commande sont reliés, de préférence, à un bus de communication apte à transmettre les signaux de commande. Cette solution présente l'avantage de ne nécessiter que l'échange d'un nombre très limité de signaux entre les moyens de commande et la machine-outil. Avantageusement, le bus de communication utilise alors une liaison sans fil.

Dans le mode de réalisation préféré de l'invention, l'unité de préhension comprend également au moins une réserve d'énergie embarquée. Cette réserve d'énergie permet, au minimum, d'assurer le bridage du bloc de matière à usiner dans les moyens de préhension, lors des transferts de l'unité de préhension entre le poste de chargement déchargement et la machine-outil, lorsque lesdits moyens de préhension doivent être alimentés en permanence.

Dans ce cas, la réserve d'énergie peut être dimensionnée pour fournir la quantité d'énergie nécessaire à l'usinage complet d'une pièce quelconque sur la machine-outil.

Selon un perfectionnement avantageux de l'invention, les moyens de préhension sont aptes à exercer un effort de traction sur la pièce, de façon à modifier sa fréquence propre et à limiter ainsi les vibrations de la pièce en cours d'usinage.

De préférence, des moyens de détection de vibration équipent alors au moins l'un des moyens de préhension. Des signaux délivrés par les moyens de détection de vibrations sont alors transmis avantageusement aux moyens de commande, qui régulent l'effort de traction exercé sur la pièce, de façon à minimiser ses vibrations.

De surcroît, les moyens de commande peuvent être placés dans au moins un coffret étanche apte à les protéger d'éventuelles agressions qu'il pourrait subir lors de l'usinage de la pièce sur la machine-outil. Des moyens d'évacuation de la chaleur équipent alors le coffret, si cela est nécessaire.

L'invention a aussi pour objet un dispositif d'usinage de pièces, comprenant au moins une unité de préhension telle que définie ci-dessus, au moins une machine-outil apte à recevoir l'unité de préhension, au moins un poste de chargement déchargement apte à recevoir l'unité de préhension et des moyens aptes à délivrer de l'énergie à l'unité de préhension, dans lequel chaque machine outil comprend de plus des deuxièmes moyens de commande, aptes à émettre lesdits signaux de commande et des moyens de transmission de signaux sont prévus pour transmettre lesdits signaux de commande entre les moyens de commande de l'unité de préhension et les deuxièmes moyens de commande, lorsque l'unité de préhension est reçue sur la machine-outil.

En outre, l'invention a également pour objet un procédé d'usinage de pièces au moyen d'un dispositif tel que défini ci-dessus, comprenant les phases suivantes :
- une phase de conception, consistant à définir des orientations successives d'une pièce dans la machine-outil et des séquences d'usinage propres à chacune de ces orientations ;
- une phase de fabrication, comprenant les étapes suivantes :
   - mise en place de l'unité de préhension au poste de chargement déchargement ;
   - mise en place de moyens de préhension sur l'unité de préhension ;
   - positionnement d'un bloc de matière à usiner sur l'unité de préhension et bridage dudit bloc par les moyens de préhension ;
   - transfert et mise en place de l'unité de préhension sur la machine-outil ;
   - orientation dudit bloc dans une première des orientations prédéfinies, sous l'action des moyens d'orientation pilotés par les moyens de commande de l'unité de préhension à la requête des deuxièmes moyens de commande ;
   - exécution des séquences d'usinage correspondant à cette première position ;
   - répétition des étapes d'orientation du bloc et d'exécution des séquences d'usinage autant de fois que nécessaire, conformément à la phase de conception, jusqu'à l'achèvement de la pièce ;
   - transfert de l'unité de préhension au poste de chargement déchargement ;
   - desserrage et déchargement de la pièce.

### Brève description des dessins

On décrira à présent, à titre d'exemples illustratifs et non limitatifs, différents modes de réalisation de l'invention, en se référant aux dessins annexés, dans lesquels :
- la figure 1 est une vue de face qui représente schématiquement un dispositif d'usinage intégrant une unité de préhension conforme à l'invention ;
- la figure 2 est une vue en perspective qui représente plus en détail un premier mode de réalisation d'une unité de préhension conforme à l'invention portant un bloc de matière à usiner ;
- la figure 3 est une vue en perspective comparable à la figure 2, illustrant un deuxième mode de réalisation d'une unité de préhension conforme à l'invention, en l'absence de pièce ; et
- la figure 4 représente l'unité de préhension de la figure 3 en cours d'usinage, vue du côté opposé par rapport à la figure 3.

### Description détaillée de modes de réalisation préférés de l'invention

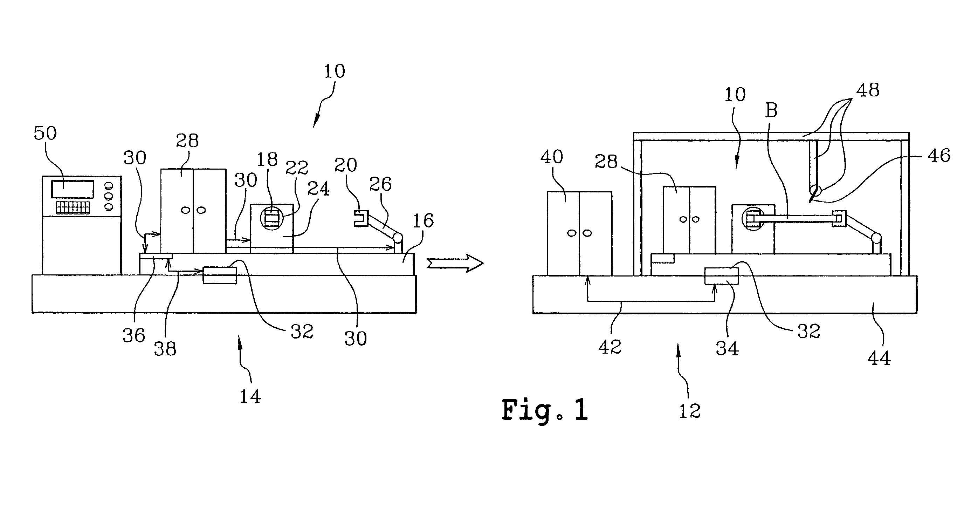

Comme l'illustre schématiquement la figure 1, un dispositif d'usinage de pièces conforme à l'invention comprend au moins une unité de préhension 10 apte à assurer la préhension d'une ou plusieurs pièces à usiner, au moins une machine-outil 12 conçue pour recevoir l'unité de préhension, afin de réaliser un usinage programmé de la pièce, et au moins un poste de chargement déchargement apte à recevoir l'unité de préhension pour assurer notamment le chargement et le déchargement de la pièce.

Dans la configuration la plus simple, illustrée schématiquement sur la figure 1, le dispositif comprend une seule unité de préhension 10, une seule machine-outil 12 et un poste de chargement déchargement unique 14 servant à la fois au chargement du bloc de matière à usiner et au déchargement de la pièce usinée.

A l'opposé, l'invention concerne également un dispositif de type "centre d'usinage", comprenant plusieurs machines-outils, une ou plusieurs unités de préhension, un ou plusieurs postes de chargement déchargement et au moins un dispositif de convoyage des unités de préhension entre le ou les postes de chargement déchargement et les différentes machines.

Le dispositif selon l'invention peut aussi présenter toute configuration intermédiaire entre ces deux configurations extrêmes. Ainsi, le chargement des blocs de matière à usiner et le déchargement des pièces usinées peuvent notamment se faire à des postes différents, généralement similaires. Pour simplifier, ces deux postes sont appelés "postes de chargement déchargement" dans l'ensemble du texte.

Comme on le montre également la figure 1, l'unité de préhension 10 comprend une palette 16 qui se présente sous la forme d'une plaque, de préférence métallique.

Dans le mode de réalisation représenté schématiquement sur la figure 1, la plaque formant la palette 16 est monobloc.

Dans une variante de réalisation non représentée, la palette 16 peut aussi comprendre une partie inférieure et une partie supérieure mobile en rotation sur la partie inférieure, autour d'un axe perpendiculaire à la face de plus grande superficie de la palette, constituée ici par sa face supérieure horizontale. La partie inférieure est alors prévue pour être immobilisée sur le plateau 44 de la machine-outil 12 par tout moyen approprié. Dans le cas représenté où la face de plus grande superficie de la palette est horizontale, l'axe de rotation de la partie supérieure est vertical.

La palette 16 sert de support à des moyens de préhension 18, auquel sont généralement associés des moyens d'appui 20. Ces moyens 18 et 20 sont interchangeables et adaptés à la pièce à usiner.

Les moyens de préhension 18 et les moyens d'appui 20 peuvent notamment être constitués d'étaux, de pinces, etc.. Dans le cas des moyens d'appui 20, il peut aussi s'agir d'un moyen spécifique présentant au moins une surface permettant d'appuyer sur la pièce en cours d'usinage, de façon à absorber et donc à limiter les vibrations de la pièce susceptibles d'être provoquées par son usinage. Dans certains cas, la surface d'appui des moyens d'appui 20 peut être réalisée en un matériau souple ou présentant de bonnes propriétés d'absorption des vibrations, tel que du caoutchouc.

Dans le mode de réalisation illustré sur la figure 1, le moyen de préhension 18 est monté sur un plateau rotatif 22, supporté par un bâti 24 fixé sur la plaque formant la palette 16. Plus précisément, l'axe de rotation du plateau 22 est, dans ce cas, parallèle à la face supérieure (ici horizontale) de ladite plaque. Toutefois, cet agencement n'est donné qu'à titre d'exemple, la nature et les possibilités d'orientation du moyen de préhension 18 étant choisis en fonction des caractéristiques propres à la pièce à usiner.

De façon comparable, dans le mode de réalisation illustré à titre d'exemple sur la figure 1, les moyens d'appui 20 sont montés sur la plaque formant la palette 16 par un bras rotatif 26, apte à pivoter autour d'un axe parallèle à la face supérieure (ici horizontale) de ladite plaque, cet axe de pivotement étant, dans ce cas, orthogonal à l'axe de rotation du plateau 24.

Le plateau rotatif 22 et le bras rotatif 26 forment ainsi des moyens d'orientation pour les moyens de préhension 18 et pour les moyens d'appui 20. Bien entendu, le nombre de moyens de préhension 18 et des moyens d'appui éventuels 20 dépend de la forme et des dimensions de la pièce à usiner

La palette 16 supporte également des premiers moyens de commande 28. Ces moyens de commande 28 sont reliés à des actionneurs (non représentés) des moyens d'orientation constitués par le plateau rotatif 22 et le bras rotatif 26 dans le mode de réalisation représenté. Généralement, ils sont aussi reliés à des actionneurs (non représentés) des moyens de préhension 18 et des moyens d'appui 20.

Dans le mode de réalisation préféré de l'invention, les premiers moyens de commande 28 sont intégrés dans au moins un coffret étanche (non représenté). Ce coffret permet alors de protéger les moyens de commande des éventuelles agressions qu'ils pourraient subir lors de l'usinage de la pièce dans la machine-outil 12 (projections de copeaux, de fluide de lubrification, etc.). Lorsque cela est nécessaire, des moyens d'évacuation de la chaleur (non représenté), tels qu'un dispositif de ventilation ou de climatisation, sont intégrés au coffret.

Les actionneurs qui équipent l'unité de préhension 10 peuvent être de différentes natures, sans sortir du cadre de l'invention. Ainsi, ces actionneurs peuvent être commandés par un fluide hydraulique sous pression, de l'air comprimé, le vide, une alimentation électrique, etc..

Dans le mode de réalisation représenté schématiquement sur la figure 1, la palette 16 est équipée de premiers moyens de connexion 32, prévus pour être automatiquement raccordés à des deuxièmes moyens de connexion complémentaires 34 de la machine-outil 12. Ces deuxièmes moyens de connexion sont, par exemple, montés sur le plateau 44 de la machine-outil 12.

Lorsqu'ils sont raccordés, les moyens de connexion 32 et 34 assurent, d'une part, l'alimentation en énergie des actionneurs qui équipent l'unité de préhension 10, à partir de sources d'énergie disponibles sur la machine-outil et, d'autre part, un échange de signaux entre l'unité de préhension et la machine-outil. Selon la nature de l'énergie utilisée, sa transmission entre la machine-outil 12 et l'unité de préhension 10 est effectuée par des tuyaux et/ou des câbles.

De façon plus précise, la transmission des signaux est faite entre les premiers moyens de commande 28 équipant l'unité de préhension 10 et dès deuxièmes moyens de commande 40 équipant la machine-outil 12. Sur la machine-outil, cette transmission est faite par exemple par des câbles 42.

Dans le mode de réalisation représenté sur la figure 1, la palette 16 est également équipée de troisièmes moyens de connexion 36. Ces troisièmes moyens de connexion 36 sont reliés aux premiers moyens de connexion 32 par des lignes 38 telles que des tuyaux et/ou des câbles, qui assurent la transmission des énergies et des signaux. Les troisièmes moyens de connexion 36 sont reliés aux premiers moyens commande 28 et aux différents actionneurs qui équipent par exemple les moyens de préhension 18, les moyens d'appui 20, le plateau rotatif 22 et le bras rotatif 26, dans le mode de réalisation représenté. Cette transmission est assurée ici par des lignes 30 telles que des tuyaux ou des câbles.

Dans un mode de réalisation préféré de l'invention, l'unité de préhension 10 comporte au moins un réservoir d'énergie (non représenté) tel que, par exemple, un réservoir de fluide hydraulique sous pression, un réservoir d'air comprimé, une réserve de vide, une batterie d'alimentation électrique, etc.. Cet agencement permet aux moyens de préhension 18 et aux moyens d'appui 20 de continuer à assurer leur fonction de bridage lorsque l'unité de préhension 10 se trouve entre la machine-outil 12 et le poste de chargement déchargement 14, dans le cas où ladite fonction de bridage nécessiterait en permanence une alimentation en énergie.

Dans une variante de ce mode de réalisation préféré de l'invention, l'unité de préhension 10 comporte des réservoirs embarqués pour chacune des énergies utilisées sur cette unité. Ces réservoirs sont remplis lorsque l'unité de préhension 10 se trouve au poste de chargement déchargement 14. Leur capacité est déterminée afin que l'unité de préhension dispose de suffisamment d'énergie pour pouvoir usiner une pièce en totalité. Cet agencement permet de supprimer toute transmission d'énergie par les moyens de connexion 32 et 36.

Dans un mode de réalisation préféré de l'invention, la transmission des signaux entre les moyens de commande 28 et 40 est faite au moyen d'un bus de communication tel qu'un bus de terrain industriel de type "Profibus", "Modbus" ou autre. Cette solution présente l'avantage de ne nécessiter l'échange que d'un nombre très limité de signaux entre les moyens de commande 28 et 40. Cela permet d'améliorer la fiabilité et de réduire les coûts de réalisation.

Dans une variante de ce mode de réalisation, la communication entre les moyens de commande 28 et 40 est assurée par un bus de communication utilisant une liaison sans fil telle que, par exemple, une liaison radio, infrarouge ou autre. Cet agencement présente l'avantage de supprimer toute transmission de signaux par les moyens de connexion 32 et 36.

Lorsque cette dernière variante est combinée avec la présence, sur l'unité de préhension 10, d'un réservoir pour chacune des énergies utilisées sur cette unité, les moyens de connexion 32 et 36 peuvent être totalement supprimés.

Comme on l'a observé précédemment, les premiers moyens de commande 28 embarqués sur l'unité de préhension 10 contrôlent notamment la position et les mouvements des moyens d'orientation matérialisés par le plateau rotatif 22 et le bras rotatif 26 sur la figure 1, en fonction des consignes en provenance des deuxièmes moyens de commande 40 qui équipent la machine-outil.

Cet agencement est avantageux car il permet de mettre en oeuvre les consignes de façon locale et autonome sur l'unité de préhension 10, sans nécessiter le contrôle des moyens d'orientation par les moyens de commande 40 de la machine-outil. En effet, un tel contrôle aurait pour inconvénient d'accroître la charge de travail de ces moyens de commande 40 et il nécessiterait de nombreuses liaisons (signaux de commande, capteurs, etc.) entre ces moyens de commande 40 et les moyens d'orientation matérialisés par le plateau rotatif 22 et le bras rotatif 26. Cela augmenterait le coût de réalisation et le risque de panne.

La machine-outil 12 est une machine d'usinage à grande vitesse qui permet de réaliser des opérations d'usinage telles que, par exemple, des opérations de fraisage, d'alésage, de perçage, de tronçonnage, etc.. Elle comporte le plateau 44, sur lequel peut être fixée la palette 12 de l'unité de préhension 10. Comme on l'a déjà mentionné, le plateau 44 comporte des moyens de connexion 34, aptes à se raccorder sur les moyens de connexion 32 de l'unité de préhension 10. Lorsqu'ils sont raccordés, les moyens de connexion 32 et 34 permettent de fournir à l'unité de préhension 10 les énergies nécessaires à son fonctionnement et de transmettre des signaux entre les premiers moyens de commande 28 et les deuxièmes moyens de commande 40. Les premiers moyens de commande 28 peuvent notamment recevoir des ordres des deuxièmes moyens de commande 40.

De façon classique, la machine-outil 12 comporte au moins un outil 46 et des moyens 48 aptes à assurer le déplacement, l'orientation et l'actionnement de cet outil.

L'utilisation de l'unité de préhension 10 conforme à l'invention permet de modifier la position, l'orientation et, éventuellement, la préhension de la pièce en cours d'usinage. On optimise ainsi les conditions d'usinage en donnant à l'orientation relative entre l'outil et la pièce la meilleure configuration possible, quelle que soit la face de la pièce en cours d'usinage.

De façon plus précise, les modifications de la position, l'orientation et, éventuellement, la préhension de la pièce sont réalisées dans la machine-outil, où elles sont pilotées par les premiers moyens de commande 28 de l'unité de préhension 10, qui reçoivent des ordres appropriés des deuxièmes moyens de commande 40 équipant la machine-outil 12. Ceci est très avantageux car les opérations précitées peuvent ainsi être réalisées sans aucune intervention d'un opérateur et sans qu'il soit nécessaire de transférer l'unité de préhension au poste de chargement déchargement 14. La productivité s'en trouve améliorée.

Comme l'illustre également la figure 1, le poste de chargement déchargement 14 est équipé d'au moins une source d'énergie apte à alimenter en énergie l'unité de préhension 10, lorsqu'elle se trouve à ce poste.

De plus, le poste de chargement déchargement 14 inclut des troisièmes moyens de commande 50. Lorsque l'unité de préhension 10 se trouve au poste de chargement déchargement 10, les troisièmes moyens de commande 50 sont reliés aux premiers moyens de commande 28 au travers des moyens de connexion 32 et 36.

Dans la pratique, les troisièmes moyens de commande 50 se présentent sous la forme d'un pupitre de dialogue avec l'opérateur. Ce pupitre comprend au moins un moyen de visualisation tel que, par exemple, un écran et/ou des voyants lumineux et au moins un moyen de saisie tel que, par exemple, un clavier et/ ou des boutons poussoirs.

Comme on l'a déjà mentionné, le dispositif d'usinage peut aussi comprendre un ou plusieurs moyens de convoyage, aptes à acheminer chaque unité de préhension 10 entre la machine-outil 12 et le poste de chargement déchargement 14.

L'usinage de pièces mécaniques quelconques au moyen d'un dispositif d'usinage tel que décrit précédemment est réalisé en mettant en oeuvre un procédé d'usinage qui va à présent être exposé.

Ce procédé comprend tout d'abord une phase de conception, au cours de laquelle un programmeur définit le processus opératoire de l'usinage. Plus précisément, le programmeur définit les orientations successives qui doivent être données au bloc de matière à usiner, ainsi que les différentes séquences d'usinage correspondant à chacune de ces orientations. Ces séquences d'usinage intègrent notamment les changements de position et d'orientation de l'outil, ses déplacements et les éventuels changements d'outil. La définition des orientations successives du bloc de matière à usiner concerne les changements d'orientation et/ou de préhension dudit bloc.

Dans le cas où une série de pièces identiques doit être produite, la phase de conception est commune à l'ensemble des pièces.

Le procédé d'usinage comporte ensuite une phase de fabrication. Lorsque plusieurs pièces identiques doivent être fabriquées, cette phase de fabrication est répétée pour chacune des pièces.

Lors d'une première étape de la phase d'usinage, une unité de préhension 10 est amenée au poste de chargement déchargement 14.

Un opérateur met alors en place sur cette unité de préhension des moyens de préhension 18 et, éventuellement, d'appui 20 adaptés à la pièce à usiner, tels qu'un ou plusieurs étaux, pinces, etc.. Ces différents moyens de préhension et d'appui sont interchangeables et peuvent donc être remplacés rapidement selon le type de pièce à usiner, de telle sorte que cette opération n'est pas pénalisante en termes de productivité.

Dans un premier mode de mise en oeuvre, cette opération est réalisée de façon entièrement manuelle. L'opérateur déverrouille les moyens de préhension déjà en place et les enlève de leur support par une action mécanique. Il met ensuite en place les moyens de préhension adaptés à la pièce à usiner, puis les verrouille en position par une nouvelle action mécanique.

Dans un autre mode de mise en oeuvre, l'opérateur réalise les opérations de déverrouillage, puis de verrouillage des moyens de préhension en agissant sur les moyens de saisie du pupitre formant les troisièmes moyens de commande 50, de façon à formuler une requête sur les premiers moyens de commande 28. Les moyens de commande 28 pilotent alors les actionneurs assurant la réalisation des opérations désirées.

L'opérateur positionne ensuite dans l'unité de préhension 10 un bloc de matière brute dans laquelle doit être usinée la pièce à réaliser. La position et l'orientation de ce bloc correspondent à celles qui ont été définies auparavant lors de la phase de conception.

A cet effet, un support approprié peut être posé sur une partie fixe de l'unité de préhension 10, telle que la palette 16, afin de positionner le bloc de matière et de le maintenir dans cette position jusqu'à sa préhension par les moyens de préhension 18. L'opérateur agit alors sur les moyens de saisie du pupitre matérialisant les troisièmes moyens de commande 50, de façon à formuler une requête auprès des premiers moyens de commande 28 pour actionner les moyens de préhension 18 et, éventuellement, d'appui 20. On réalise ainsi le bridage du bloc de matière dans la position et l'orientation souhaitées.

L'unité de préhension est ensuite enlevée du poste de chargement déchargement, après que les lignes d'alimentation en énergie et de transmission de signaux aient été déconnectées.

Selon l'ordonnancement et la planification des tâches de l'atelier, l'unité de préhension 10 peut être alors amenée soit dans une zone de stockage temporaire, soit directement dans la machine outil 12 appropriée.

Lorsque l'unité de préhension 10 arrive sur le plateau 44 de la machine outil 12, la palette 16 est posée sur le plateau 44 et fixée à celui-ci. Les moyens de connexion 32 et 34 sont alors raccordés afin de réaliser les liaisons appropriées des énergies et des signaux.

L'usinage de la pièce est alors effectué, en suivant les séquences préalablement définies lors de la phase de conception. Plus précisément, les séquences relatives à chaque orientation de la pièce sont exécutées à tour de rôle, chaque séquence étant suivie d'une modification de l'orientation de la pièce obtenue par une action sur les moyens d'orientation et/ou sur les moyens de préhension. Ces différentes opérations sont pilotées par les moyens de commande 28 de l'unité de préhension, en réponse à des ordres en provenance des moyens de commande 40 de la machine-outil 12. L'usinage complet de la pièce peut ainsi être réalisé de façon totalement automatisée, sans retour de l'unité de préhension au poste de chargement déchargement, dans les meilleures conditions de coupe et d'évacuation des copeaux.

Une fois l'usinage terminé, l'unité de préhension 10 est déconnectée et retirée de la machine-outil 12, puis acheminée soit vers une position d'attente, soit vers un poste de chargement déchargement. Ce dernier poste peut être confondu ou non avec le poste 14 affecté au chargement du bloc de matière à usiner, selon la configuration de l'atelier.

Lorsque l'unité de préhension est au poste de chargement déchargement, un opérateur agit sur les moyens de saisie du pupitre qui matérialise les troisièmes moyens de commande 50. Ces derniers formulent alors une requête afin que les premiers moyens de commande 28 actionnent les moyens de préhension 18 et éventuellement d'appui 20, de façon à libérer la pièce.

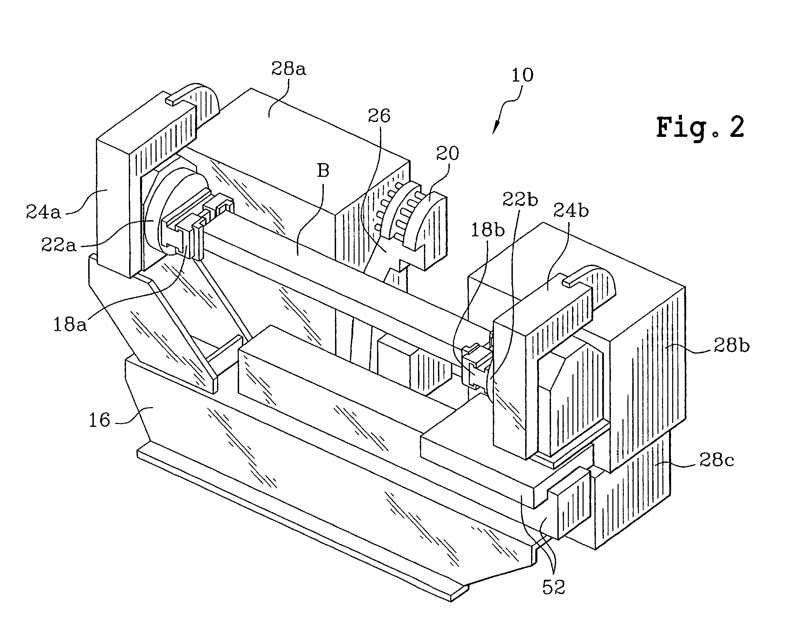

On décrira à présent, en se référant à la figure 2, un premier mode de réalisation de l'unité de préhension conforme à l'invention.

Dans ce mode de réalisation, l'unité de préhension 10 est agencée de façon à réaliser l'usinage d'un bloc de matière B de forme allongée et sensiblement parallélépipédique. Ce bloc B peut notamment être un bloc d'aluminium.

Comme on l'a décrit précédemment, l'unité de préhension 10 comprend une palette 16 dont seule une partie supérieure rotative est représentée. Dans l'exemple décrit, la partie rotative de la palette 16 peut tourner de 285° autour d'un axe vertical.

La palette 16 supporte le bâti fixe 24a d'un plateau rotatif 22a équipé de moyens de préhension constitués dans ce cas par un étau 18a. En outre, un deuxième étau 18b est monté sur un deuxième plateau rotatif 22b porté par un bâti mobile 24b. Ce bâti mobile 24b est monté sur la palette 16 de façon à pouvoir être déplacé vers le bâti fixe 24a et en éloignement de celui-ci, selon une direction passant par un axe commun aux deux plateaux rotatifs 22a et 22b, par des moyens de translation 52. La palette 16 supporte également un bras rotatif 26 muni d'une pince 20 matérialisant des moyens d'appui placés entre les bâtis 24a et 24b. Dans l'exemple décrit, les plateaux rotatifs 22a et 22b sont de type "Peiseler" AWU355 avec codeurs et ils peuvent prendre 360 000 positions sur un tour.

Dans ce cas, les premiers moyens de commande sont contenus dans trois coffrets 28a, 28b et 28c. Le premier coffret 28a est affecté par exemple à l'alimentation en énergie et aux filtres. Le deuxième coffret 28b contient notamment un automate programmable, une interface avec un bus de communication de type "Profibus" et des cartes de régulation. Le troisième coffret 28c est, par exemple, un coffret hydropneumatique abritant notamment des électrovannes.

L'unité de préhension 10 de la figure 2 communique avec les moyens de commande 40 de la machine-outil 12 (figure 1) au moyen d'un réseau de communication de type "Profibus".

Les moyens de translation 52 permettent de régler la position relative du plateau rotatif 22b par rapport au plateau rotatif 22a, de façon à assurer une bonne préhension du bloc de matière B dans lequel est usinée la pièce, entre les étaux 18a et 18b.

Lorsque l'unité de préhension qui vient d'être décrite en référence à la figure 2 est amenée au poste de chargement déchargement 14, un opérateur met en place les étaux 18a et 18b sur les plateaux rotatifs 22a et 22b et la pince 20 sur le bras rotatif 26.

L'opérateur règle ensuite la position en translation du bâti 24b supportant l'étau 18b, afin que la distance entre les étaux 18a et 18b soit compatible avec la longueur du bloc de matière B à usiner. Ce réglage est effectué en agissant sur le pupitre formant les moyens de commande 50 du poste de chargement déchargement 14, ledit pupitre étant relié à l'automate contenu dans le coffret 28b de l'unité de préhension.

L'opérateur règle également les positions en rotation des plateaux 22a et 22b et, par conséquent, des étaux 18a et 18b, de façon à pouvoir placer le bloc de matière B entre lesdits étaux de telle sorte qu'ils soient correctement alignés et n'engendrent pas de couple de torsion lorsque le bloc de matière est ensuite bridé dans les étaux

L'opérateur place ensuite un support (non représenté) sur la palette 16. Il dispose alors le bloc de matière B sur ledit support et le positionne afin que ses extrémités soient placées entre les mâchoires des étaux 18a et 18b. En agissant sur le pupitre matérialisant les moyens de commande 50, l'opérateur active les mâchoires des étaux afin de brider le bloc de matière B. Celui-ci est alors maintenu en position par les étaux 18a et 18b et l'opérateur peut retirer le support précité.

On effectue alors le convoyage de l'unité de préhension 10 vers la machine-outil 12. L'unité de préhension 10 peut aussi être transportée vers une zone de stockage temporaire en attendant son acheminement vers la machine-outil, selon l'ordonnancement des tâches dans l'atelier.

Dans la machine-outil, le bloc de matière à usiner est présenté devant l'outil 46 dans une position permettant d'obtenir les meilleures conditions de coupe et d'évacuation des copeaux. A cet effet, les moyens de commande 40 de la machine-outil 12 peuvent envoyer, si nécessaire, un ordre de changement de position ou d'orientation du bloc de matière B à l'automate contenu dans le coffret 28b, par le réseau "Profibus".

Ce changement de position ou d'orientation peut être obtenu en commandant une rotation de la partie supérieure de la palette 16 et/ou une rotation simultanée des plateaux 22a et 22b. Ces derniers doivent être actionnés de façon à ne pas engendrer de couple de torsion sur le bloc de matière. A cet effet, une première solution consiste à entraîner les deux plateaux en rotation de façon synchrone. Une autre solution consiste à ne motoriser que l'un des deux plateaux, le deuxième étant libre en rotation.

Comme on l'a déjà mentionné, un effort de traction peut être appliqué sur le bloc de matière B en cours d'usinage. Cet effort est alors appliqué selon l'axe longitudinal dudit bloc, en agissant sur le dispositif de déplacement 52. On modifie ainsi la fréquence de résonance du bloc de matière B, de façon à limiter les vibrations.

Une fois un changement de position effectué, l'automate contenu dans le coffret 28b envoie un message aux moyens de commande 40 de la machine-outil 12, au travers du réseau "Profibus", afin de l'informer de l'achèvement de cette opération. Les moyens de commande 40 peuvent alors commander l'exécution des étapes suivantes de l'usinage.

De cette manière, la pièce tenue par les étaux 18a et 18b peut être usinée sur toutes ses faces. Ainsi, les faces d'extrémité de la pièce, sensiblement perpendiculaires à l'axe de rotation commun des plateaux 22a et 22b, peuvent être usinées à condition de laisser subsister des pattes entre ladite pièce et les parties du bloc de matière bridées entre les mors des étaux 18a et 18b. Ces pattes pourront être sciées après le démontage de la pièce au poste de chargement déchargement. Elles pourront aussi être coupées par un outil approprié sur la machine-outil, la pièce terminée étant alors saisie par la pince 20 située à l'extrémité du bras rotatif 26. La pièce complètement terminée est alors maintenue en position par la pince 20 et les résidus des extrémités du bloc B par les étaux 18a et 18b.

Une fois l'usinage terminé, l'unité de préhension est sortie de la machine-outil 12 et convoyée vers le poste de chargement déchargement initial ou un autre poste similaire. Un opérateur commande alors la libération de la pièce par les moyens de préhension 18a, 18b ou 20. A cet effet, il formule une requête auprès de l'automate contenu dans le coffret 28b, en agissant sur le pupitre qui matérialise les moyens de commande 50.

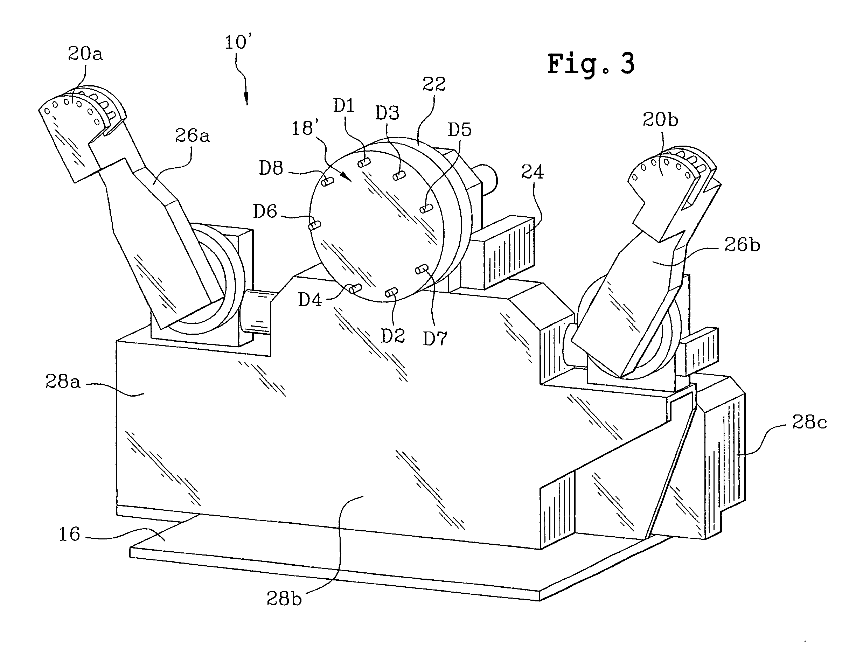

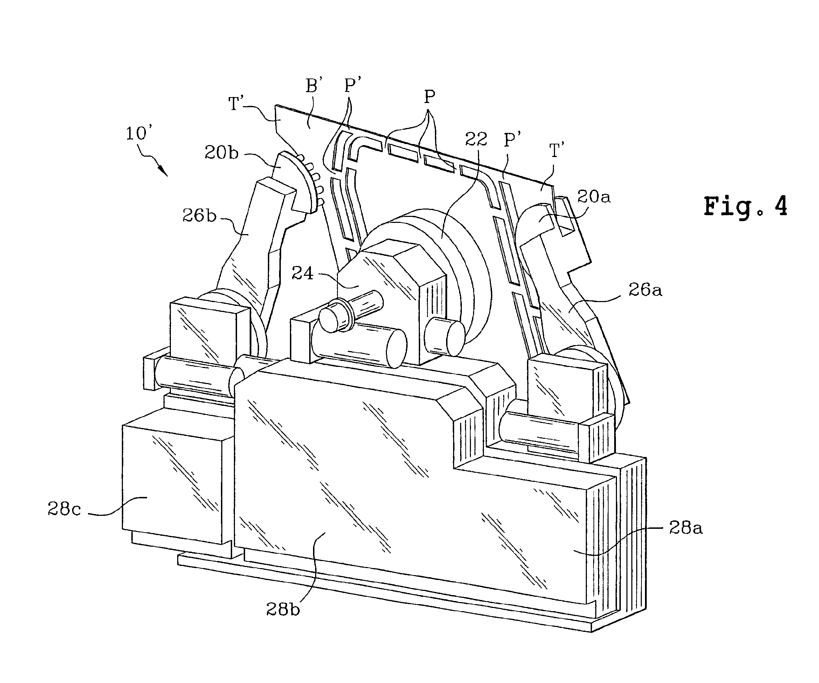

On décrira à présent, en se référant aux figures 3 et 4, un deuxième mode de réalisation de l'unité de préhension conforme à l'invention.

Dans ce mode de réalisation, l'unité de préhension 10' est agencée de façon à réaliser l'usinage d'un bloc de matière B' en forme de plaque sensiblement plane, pour réaliser une pièce telle qu'un encadrement de pare-brise d'avion.

Comme l'illustre en particulier la figure 3, l'unité de préhension 10' comprend une palette 16 supportant le bâti 24 d'un plateau rotatif 22 équipé de moyens de préhension 18'. La palette 16 supporte également deux bras de préhension 26a et 26b munis de pinces 20a et 20b, ainsi que trois coffrets 28a, 28b et 28c dans lesquels sont logés les moyens de commande, de la même manière que dans le mode de réalisation décrit ci-dessus en référence à la figure 2. Comme précédemment, l'unité de préhension 10' communique avec les moyens de commande 40 de la machine-outil 12 par un réseau "Profibus".

Les moyens de préhension 18' se présentent sous la forme de huit doigts D1 à D8, répartis sur un même cercle centré sur l'axe du plateau rotatif 22, de façon à faire saillie sur la face avant dudit plateau. Plus précisément, les doigts D1 et D2, diamétralement opposés, sont des tiges fixées au plateau rotatif 22. Les doigts D3 et D4, diamétralement opposés, sont des doigts de préhension aptes à se déplacer parallèlement à l'axe du plateau rotatif 22. A cet effet, chacun d'entre eux comprend un mandrin à expansion monté sur une tige de vérin. Enfin, les doigts D5 à D8 sont des vérins de préhension fixes, c'est-à-dire qu'ils comprennent chacun un mandrin à expansion monté sur une tige solidaire du plateau rotatif 22.

La plaque constituant le bloc de matière B' à usiner est percée dans sa partie centrale de huit trous disposés de la même manière que les huit doigts D1 à D8.

Lorsque l'unité de préhension 10' se trouve au poste de chargement déchargement 14, un opérateur met en place sur le plateau rotatif 22 les doigts D1 à D8 formant les moyens de préhension 18'. Il met également en place sur les bras rotatifs 26a et 26b les pinces 20a et 20b.

L'opérateur positionne ensuite le bloc de matière B' sur les moyens de préhension 18', en insérant les doigts D1 à D8 dans les trous pratiqués dans ledit bloc. Les doigts fixes D1 et D2 servent alors de guidage.

L'opérateur commande ensuite l'expansion des mandrins qui équipent les doigts D3 et D4 dans les trous correspondants du bloc de matière B', de façon à assurer le maintien en position de ce dernier. A cet effet, il agit sur le pupitre matérialisant les moyens de commande 50 du poste de chargement déchargement 14, ledit pupitre étant relié aux moyens de commande de l'unité de préhension 10'.

L'opérateur commande alors le retrait des deux vérins qui équipent les doigts D3 et D4, de façon à plaquer le bloc de matière B' contre le plateau rotatif 22, pour permettre un meilleur maintien. De façon avantageuse, des capteurs détectent que le bloc de matière est bien en appui contre le plateau. Les mandrins des quatre autres doigts D5 à D8 sont alors expansés dans leurs trous respectifs afin de compléter la préhension du bloc de matière B'.

L'opérateur commande ensuite le convoyage de l'unité de préhension 10' vers la machine-outil ou vers une zone de stockage temporaire, comme on l'a décrit précédemment en référence à la figure 2.

Dans la machine outil, la pièce est présentée devant l'outil 46 dans une position permettant d'obtenir les meilleures conditions de coupe et d'évacuation des copeaux. A cet effet, comme dans le mode de réalisation précédent, les moyens de commande 40 de la machine-outil 12 peuvent envoyer à l'automate contenu dans le coffret 28b un ordre de changement de position ou d'orientation du bloc de matière, par le réseau "Profibus". Le changement de position ou d'orientation peut être réalisé en commandant une rotation de la partie supérieure de la palette 16 et/ou une rotation du plateau 22 portant les doigts D1 à D8. On agit également sur les bras rotatifs 26a et 26b, afin d'obtenir une bonne préhension du bloc de matière permettant de minimiser les vibrations.

Une fois le changement de position et/ou d'orientation effectué, l'automate contenu dans le coffret 28b envoie un message aux moyens de commande 40 de la machine-outil 12, par l'intermédiaire du réseau "Profibus", afin de l'informer de l'achèvement de cette opération. Les moyens de commande 40 de la machine-outil 12 peuvent alors piloter les étapes d'usinage proprement dit.

Une première étape de l'usinage consiste, de préférence, à réaliser un ensemble de tenons T' à la périphérie de la plaque formant le bloc de matière B' à usiner. Ces tenons T' sont destinés à permettre ultérieurement une meilleure préhension dudit bloc par les pinces 20a et 20b. Pendant l'usinage des tenons T', le bloc de matière B' est uniquement maintenu par les moyens de préhension 18'.

Le bloc de matière B' peut ensuite être usiné sur toutes ses faces, sa préhension étant réalisée par les doigts D1 à D8 et par les pinces 20a et 20b.

Afin de pouvoir orienter le bloc B' en rotation le plus longtemps possible au moyen du plateau rotatif 22 et de minimiser les déformations en cours d'usinage, on laisse subsister des pattes de matière P entre la partie centrale non usinée, fixée sur le plateau 22 et la pièce proprement dite, comme l'illustre la figure 4. Ces pattes P peuvent être coupées au moyen d'un outil approprié, sur la machine-outil 12, une fois l'usinage terminé. Les pattes P peuvent aussi être coupées ultérieurement, une fois la pièce retirée de l'unité de préhension.

De façon comparable, des pattes P' sont également laissées entre les tenons T' et la pièce, pour permettre le maintien de celle-ci par les pinces 20a et 20b. Ces pattes P' sont coupées une fois la pièce retirée de l'unité de préhension.

Lorsque l'usinage est terminé, l'unité de préhension est sortie de la machine-outil et convoyée vers le premier poste de chargement déchargement ou vers un autre poste similaire à celui-ci. Un opérateur commande alors la libération de la pièce par les moyens de préhension 18', 20a et 20b. A cet effet, il formule une requête auprès de l'automate contenu dans le coffret 28b, en agissant sur le pupitre qui matérialise les moyens de commande 50. De façon avantageuse, l'automate précité commande des éjecteurs qui facilitent l'évacuation de la partie centrale non usinée du bloc B', maintenue par les moyens de préhension 18'.

## Revendications

1. Unité de préhension (10, 10') apte à être transférée entre au moins une machine-outil (12) et au moins un poste de chargement déchargement (14), pour permettre l'usinage automatisé d'au moins une pièce, l'unité de préhension (10, 10') comprenant une palette (16) et des moyens de préhension (18, 18a, 18b, 18') de ladite pièce, montés sur la palette (16), des moyens d'orientation (22, 22a, 22b), par lesquels les moyens de préhension (18, 18a, 18b, 18') sont montés sur la palette (16), des moyens de commande (28), aptes à actionner les moyens d'orientation (22, 22a, 22b), en réponse à des signaux de commande en provenance de la machine-outil (12), et étant **caractérisée en ce qu**'elle comprend de plus des moyens d'appui (20, 20a, 20b), montés sur la palette (16) par d'autres moyens d'orientation (26, 26a, 26b).

2. Unité de préhension selon la revendication 1, dans laquelle les moyens de commande (28) sont également aptes à actionner les moyens de préhension (18, 18a, 18b, 18') .

3. Unité de préhension selon l'une quelconque des revendications précédentes, comprenant de plus au moins un bâti (24, 24a, 24b) fixé sur la palette (16) et un plateau rotatif (22, 22a, 22b) monté sur le bâti et formant les moyens d'orientation, les moyens de préhension (18, 18a, 18b, 18') étant montés sur le plateau rotatif (22, 22a, 22b).

4. Unité de préhension selon l'une quelconque des revendications précédentes, dans laquelle les moyens d'appui (20, 20a, 20b) comprennent au moins une surface apte à être appliquée sur la pièce, ladite surface étant réalisée en un matériau absorbant les vibrations.

5. Unité de préhension selon l'une quelconque des revendications précédentes, dans laquelle lesdits autres moyens d'orientation comprennent un bras rotatif (26, 26a, 26b) monté sur la palette (16).

6. Unité de préhension selon l'une quelconque des revendications précédentes, dans laquelle les moyens de préhension (18, 18a, 18b, 18') sont interchangeables.

7. Unité de préhension selon l'une quelconque des revendications précédentes, dans laquelle la palette (16) comprend une partie mobile en rotation autour d'un axe perpendiculaire à une face de plus grande surface de la palette, les moyens de préhension (18, 18a, 18b, 18') étant montés sur ladite partie mobile.

8. Unité de préhension selon l'une quelconque des revendications précédentes, comprenant de plus des premiers moyens de connexion (32), aptes à être automatiquement raccordés sur des deuxièmes moyens de connexion (34) montés sur la machine-outil (12) lorsque l'unité de préhension (10, 10') est reçue dans la machine-outil.

9. Unité de préhension selon la revendication 8, comprenant de plus des troisièmes moyens de connexion (36), reliés d'une part aux premiers moyens de connexion (32) et d'autre part aux moyens d'orientation (22, 22a, 22b) et aux moyens de commande (28).

10. Unité de préhension selon l'une quelconque des revendications précédentes, dans laquelle les moyens de commande (28) sont reliés à un bus de communication apte à transmettre les signaux de commande.

11. Unité de préhension selon la revendication 10, dans laquelle le bus de communication est un bus de communication sans fil.

12. Unité de préhension selon l'une quelconque des revendications précédentes, comprenant de plus au moins une réserve d'énergie embarquée.

13. Unité de préhension selon la revendication 12, dans laquelle la réserve d'énergie est apte à fournir une quantité d'énergie nécessaire à l'usinage complet d'une pièce quelconque sur la machine-outil (12).

14. Unité de préhension selon l'une quelconque des revendications précédentes, dans laquelle les moyens de préhension (18, 18a, 18b, 18') sont aptes à exercer un effort de traction sur la pièce, de façon à modifier sa fréquence propre.

15. Unité de préhension selon la revendication 14, dans laquelle des moyens de détection de vibrations équipent au moins l'un des moyens de préhension (18, 18a, 18b, 18').

16. Unité de préhension selon la revendication 15, dans laquelle des signaux délivrés par les moyens de détection de vibrations sont transmis aux moyens de commande (28), qui régulent l'effort de traction exercé sur la pièce, de façon à minimiser lesdites vibrations.

17. Unité de préhension selon l'une quelconque des revendications précédentes, dans laquelle les moyens de commande (28) sont placés dans au moins un coffret étanche (28a, 28b, 28c).

18. Unité de préhension selon la revendication 17, dans laquelle le coffret étanche (28a, 28b, 28c) est muni de moyens d'évacuation de la chaleur.

19. Dispositif d'usinage de pièces, comprenant au moins une unité de préhension (10, 10') selon l'une quelconque des revendications précédentes, au moins une machine-outil (12) apte à recevoir l'unité de préhension, au moins un poste de chargement déchargement (14) apte à recevoir l'unité de préhension et des moyens aptes à délivrer de l'énergie à l'unité de préhension, dans lequel chaque machine outil (12) comprend de plus des deuxièmes moyens de commande (40), aptes à émettre lesdits signaux de commande et des moyens de transmission de signaux sont prévus pour transmettre lesdits signaux de commande entre les moyens de commande (28) de l'unité de préhension (10, 10') et les deuxièmes moyens de commande (40), lorsque l'unité de préhension est reçue sur la machine-outil (12).

20. Dispositif d'usinage selon la revendication 19, dans lequel le poste de chargement déchargement (14) inclut des troisièmes moyens de commande (50), aptes à émettre des signaux de commande des moyens de préhension (18, 18a, 18b, 18'), et les moyens de transmission sont également aptes à transmettre les signaux de commande des moyens de préhension lorsque l'unité de préhension (10, 10') se trouve au poste de chargement déchargement (14).

21. Dispositif d'usinage selon la revendication 20, dans lequel les troisièmes moyens de commande (50) comprennent au moins un moyen de visualisation et au moins un moyen de saisie.

22. Dispositif d'usinage selon l'une quelconque des revendications 19 à 21, combinée avec la revendication 8, dans lequel lesdits moyens de transmission comprennent de plus des quatrièmes moyens de connexion montés sur le poste de chargement déchargement (14), lesdits premiers et quatrièmes moyens de connexion étant automatiquement raccordés entre eux lorsque l'unité de préhension (10, 10') se trouve au poste de chargement déchargement (14).

23. Dispositif d'usinage selon l'une quelconque des revendications 19 à 22, dans lequel les moyens aptes à délivrer de l'énergie à l'unité de préhension (10, 10') comprennent au moins une source d'énergie équipant la machine outil (12) et des moyens de transmission d'énergie entre ladite source d'énergie et les moyens de commande (28) de l'unité de préhension (10, 10').

24. Dispositif d'usinage selon les revendications 8 et 23 combinées, dans lequel les premiers et les deuxièmes moyens de connexion (32, 34) font également partie des moyens de transmission d'énergie.

25. Dispositif d'usinage selon l'une quelconque des revendications 19 à 24, dans lequel la machine-outil (12) est une machine d'usinage à grande vitesse.

26. Dispositif d'usinage selon l'une quelconque des revendications 19 à 25, dans lequel au moins un moyen de convoyage est prévu pour acheminer l'unité de préhension (10, 10') entre la machine-outil (12) et le poste de chargement déchargement (14).

27. Procédé d'usinage de pièces au moyen d'un dispositif selon l'une quelconque des revendications 19 à 26, comprenant les phases suivantes :
- une phase de conception, consistant à définir des orientations successives d'une pièce dans la machine-outil (12) et des séquences d'usinage propres à chacune de ces orientations ;
- une phase de fabrication, comprenant les étapes suivantes :
- mise en place de l'unité de préhension (10, 10') au poste de chargement déchargement (14) ;
- mise en place de moyens de préhension (18, 18a, 18b, 18') sur l'unité de préhension (18, 18') ;
- positionnement d'un bloc de matière (B, B') à usiner sur l'unité de préhension (10, 10') et bridage dudit bloc par les moyens de préhension (18, 18a, 18b, 18') ;
- transfert et mise en place de l'unité de préhension (10, 10') sur la machine-outil (12) ;
- orientation dudit bloc (B, B') dans une première des orientations prédéfinies, sous l'action des moyens d'orientation (22, 22a, 22b) pilotés par les moyens de commande (28) de l'unité de préhension (10, 10') à la requête des deuxièmes moyens de commande (40) ;
- exécution des séquences d'usinage correspondant à cette première position ;
- répétition des étapes d'orientation du bloc et d'exécution des séquences d'usinage autant de fois que nécessaire, conformément à la phase de conception, jusqu'à l'achèvement de la pièce ;
- transfert de l'unité de préhension (10, 10') au poste de chargement déchargement (14) ;
- desserrage et déchargement de la pièce.

28. Procédé selon la revendication 27, dans lequel la phase de conception est commune à l'usinage de plusieurs pièces identiques et la phase de fabrication est répétée lors de l'usinage de chaque pièce.

## Claims

1. Gripping unit (10, 10') capable of being transferred between at least one machine tool (12) and at least one loading unloading station (14), to enable automated machining of at least one part, the gripping unit (10, 10') comprising a pallet (16) and gripping means (18, 18a, 18b, 18') for gripping the said part, mounted on the pallet (16), orientation means (22, 22a, 22b) by which the gripping means (18, 18a, 18b, 18') are mounted on the pallet (16), control means (28) capable of activating the orientation means (22, 22a, 22b) in response to control signals output from the machine tool (12), **characterized in that** it also comprises bearing means (20, 20a, 20b) mounted on the pallet (16) through other orientation means (26, 26a, 26b).

2. Gripping unit according to claim 1, in which the control means (28) are also capable of activating the gripping means (18, 18a, 18b, 18').

3. Gripping unit according to either of the previous claims, comprising also at least one frame (24, 24a, 24b) fixed on the pallet (16) and a rotating plate (22, 22a, 22b) mounted on the frame and forming the orientation means, the gripping means (18, 18a, 18b, 18') being installed on the rotating plate (22, 22a, 22b).

4. Gripping unit according to any one of the previous claims, in which the bearing means (20, 20a, 20b) comprise at least one surface that can be applied onto the part, the said surface being made of a material capable of absorbing vibrations.

5. Gripping unit according to any one of the previous claims, in which the said other orientation means comprise a rotating arm (26, 26a, 26b) mounted on the pallet (16).

6. Gripping unit according to any one of the previous claims, in which the gripping means (18, 18a, 18b, 18') are interchangeable.

7. Gripping unit according to any one of the previous claims, in which the pallet (16) comprises a part free to move in rotation about an axis perpendicular to a face of the pallet with the largest surface area, the gripping means (18, 18a, 18b, 18') being mounted on the said mobile part.

8. Gripping unit according to any one of the previous claims, also comprising first connection means (32) that can be automatically connected to the second connection means (34) mounted on the machine tool (12) when the gripping unit (10, 10') is held in the machine tool.

9. Gripping unit according to claim 8, also comprising third connection means (36), connected firstly to the first connection means (32) and secondly to the orientation means (22, 22a, 22b) and to the control means (28).

10. Gripping unit according to any one of the previous claims, in which the control means (28) are connected to a communication bus capable of transmitting the control signals.

11. Gripping unit according to claim 10, in which the communication bus is a wireless communication bus.

12. Gripping unit according to any one of the previous claims, also comprising at least one onboard energy reserve.

13. Gripping unit according to claim 12, in which the energy reserve is capable of supplying a quantity of energy necessary for complete machining of an arbitrary part on the machine tool (12).

14. Gripping unit according to any one of the previous claims, in which the gripping means (18, 18a, 18b, 18') are capable of applying a tension force onto the part, to modify its natural frequency.

15. Gripping unit according to claim 14, in which means of detecting vibrations are installed on at least one of the gripping means (18, 18a, 18b, 18').

16. Gripping unit according to claim 15, in which the signals output by the vibration detection means are transmitted to the control means (28) that regulate the tension force exerted on the part in order to minimize the said vibrations.

17. Gripping unit according to any one of the previous claims, in which the control means (28) are placed in at least one sealed box (28a, 28b, 28c).

18. Gripping unit according to claim 17, in which the sealed box (28a, 28b, 28c) is provided with heat dissipation means.

19. Part machining device, comprising at least one gripping unit (10, 10') according to any one of the previous claims, at least one machine tool (12) capable of holding the gripping unit, at least one loading unloading station (14) capable of holding the gripping unit, and means capable of supplying energy to the gripping unit, in which each machine tool (12) also comprises second control means (40) capable of sending the said control signals and means of transmitting signals are provided to transmit the said control signals between the control means (28) of the gripping unit (10, 10') and the second control means (40) when the machine tool (12) holds the gripping unit.

20. Machining device according to claim 19, in which the loading unloading station (14) includes third control means (50) capable of sending control signals for the gripping means (18, 18a, 18b, 18'), and the transmission means are also capable of transmitting control signals for the gripping means when the gripping unit (10, 10') is held at the loading unloading station (14).

21. Machining device according to claim 20, in which the third control means (50) comprise at least one display means and at least one input means.

22. Machining device according to any one of claims 19 to 21, combined with claim 8, in which the said transmission means also comprise fourth connection means mounted on the loading unloading station (14), the said first and fourth connection means automatically being connected to each other when the gripping unit (10, 10') is held at the loading unloading station (14).

23. Machining device according to any one of claims 19 to 22, in which the means capable of supplying energy to the gripping unit (10, 10') comprise at least one energy source installed on the machine tool (12) and energy transmission means to transmit energy between the said energy source and the control means (28) of the gripping unit (10, 10').

24. Machining device according to claims 8 and 23 combined, in which the first and second connection means (32, 34) also form part of the energy transmission means.

25. Machining device according to any one of claims 19 to 24, in which the machine tool (12) is a high speed machining machine.

26. Machining device according to any one of claims 19 to 25, in which at least one conveying means is provided to transfer the gripping unit (10, 10') between the machine tool (12) and the loading unloading station (14).

27. Process for machining parts using a device according to any one of claims 19 to 26, comprising the following phases :
- a design phase consisting of defining successive orientations of a part in the machine tool (12) and machining sequences specific to each of these orientations :
- a manufacturing phase comprising the following steps :
- placement of the gripping unit (10, 10') at the loading unloading station (14) ;
- placement of gripping means (18, 18a, 18b, 18') on the gripping unit (18, 18') ;
- placement of a block of material (B, B') to be machined on the gripping unit (10, 10') and clamping of the said block by the gripping means (18, 18a, 18b, 18') ;
- transfer and placement of the gripping unit (10, 10') on the machine tool (12) ;
- orientation of the said block (B, B'), in a first of the predefined orientations, when acted upon by orientation means (22, 22a, 22b) controlled by the control means (28) of the gripping unit (10, 10'), at the request of the second control means ;
- execution of machining sequences corresponding to this first position ;
- repetition of the block orientation and machining sequence execution steps as many times as necessary, in accordance with the design phase, until the part is completed ;
- transfer of the gripping unit (10, 10') to the loading unloading station (14) ;
- loosening and unloading the part.

28. Process according to claim 27, in which the design phase is common to machining of several identical parts and the manufacturing phase is repeated while each part is machined.

## Patentansprüche

1. Greifeinheit (10,10'), die zwischen mindestens einer Werkzeugmaschine (12) und mindestens einer Lade-/Entladestation (14) bewegt werden kann, um die automatisierte Bearbeitung mindestens eines Teils zu ermöglichen, wobei die Greifeinheit (10,10') eine Palette (16) sowie Greifmittel (18,18a,18b,18') des Teils, die auf der Palette (16) angebracht sind, Ausrichtmittel (22,22a,22b), über die die Greifmittel (18,18a,18b,18") auf der Palette (16) angebracht sind, und Steuermittel (28), welche die Ausrichtmittel (22,22a,22b) in Reaktion auf Steuersignale betätigen können, die von der Werkzeugmaschine (12) kommen, umfasst, und die
**dadurch gekennzeichnet, dass** sie außerdem Stütz- bzw. Halterungsmittel (20,20a,20b) aufweist, die auf der Palette (16) über andere Ausrichtmittel (26,26a,26b) angebracht sind.

2. Greifeinheit nach Anspruch 1, wobei die Steuermittel (28) auch die Greifmittel (18,18a,18b,18') betätigen können.

3. Greifeinheit nach einem der vorangehenden Ansprüche, außerdem mit einem Traggestell (24,24a,24b), das auf der Palette (16) befestigt ist, und einem Drehplateau (22,22a,22b), das auf dem Traggestell angebracht ist und die Ausrichtmittel bildet, wobei die Greifmittel (18,18a,18b,18') auf dem Drehplateau (22,22a,22b) angebracht sind.

4. Greifeinheit nach einem der vorangehenden Ansprüche, wobei die Stütz- bzw. Halterungsmittel (20,20a,20b) mindestens eine Oberfläche aufweisen, die an das Teil angelegt werden kann, wobei die Oberfläche aus einem schalldämpfenden Material hergestellt ist.

5. Greifeinheit nach einem der vorangehenden Ansprüche, wobei die anderen Ausrichtmittel einen auf/an der Palette (16) angebrachten Dreharm (26,26a,26b) umfassen.

6. Greifeinheit nach einem der vorangehenden Ansprüche, wobei die Greifmittel (18,18a,18b,18') untereinander austauschbar sind.

7. Greifeinheit nach einem der vorangehenden Ansprüche, wobei die Palette (16) einen um eine zu einer Seite mit größerer Oberfläche der Palette senkrechte Achse in Rotation beweglichen Abschnitt umfasst, wobei die Greifmittel (18,18a,18b,18') auf/an dem beweglichen Abschnitt angebracht sind.

8. Greifeinheit nach einem der vorangehenden Ansprüche, außerdem mit ersten Verbindungsmitteln (32), die automatisch mit zweiten, an der Werkzeugmaschine (12) angebrachten Verbindungsmitteln (34) verbunden werden können, wenn die Greifeinheit (10,10') in die Werkzeugmaschine aufgenommen ist.

9. Greifeinheit nach Anspruch 8, außerdem mit dritten Verbindungsmitteln (36), die einerseits mit den ersten Verbindungsmitteln (32) und andererseits mit den Ausrichtmittel (22,22a,22b) sowie mit den Steuermitteln (28) verbunden sind.

10. Greifeinheit nach einem der vorangehenden Ansprüche, wobei die Steuermittel (28) mit einem Kommunikationsbus verbunden sind, der die Steuersignale übertragen kann.

11. Greifeinheit nach Anspruch 10, wobei der Kommunikationsbus ein drahtloser Kommunikationsbus ist.

12. Greifeinheit nach einem der vorangehenden Ansprüche, außerdem mit mindestens einer mitgeführten Energiereserve.

13. Greifeinheit nach Anspruch 12, wobei die Energiereserve eine zur vollständigen Bearbeitung irgendeines Teils auf der Werkzeugmaschine (12) notwendige Energiemenge liefern kann.

14. Greifeinheit nach einem der vorangehenden Ansprüche, wobei die Greifmittel (18,18a,18b,18') eine Zugkraft auf das Teil ausüben können, so dass dessen Eigenfrequenz modifiziert wird.

15. Greifeinheit nach Anspruch 14, wobei mindestens eines der Greifmittel (18,18a,18b,18') mit Schwingungs-Erfassungsmitteln ausgestattet ist.

16. Greifeinheit nach Anspruch 15, wobei die von den Schwingungs-Erfassungsmitteln gelieferten Signale zu den Steuermitteln (28) übertragen werden, welche die auf das Teil einwirkende Zugkraft so regeln, dass die Schwingungen minimiert werden.

17. Greifeinheit nach einem der vorangehenden Ansprüche, wobei die Steuermittel (28) in mindestens einem dichten Kasten bzw. Gehäuse (28a,28b,28c) angeordnet sind.

18. Greifeinheit nach Anspruch 17, wobei der dichte Kasten (28a,28b,28c) mit Wärmeableitmitteln ausgestattet ist.

19. Vorrichtung zur Bearbeitung von Teilen, mit mindestens einer Greifeinheit (10,10') gemäß einem der vorangehenden Ansprüche, mindestens einer Werkzeugmaschine (12), welche die Greifeinheit aufnehmen kann, mindestens einer Lade-/Entladestation (14), welche die Greifeinheit aufnehmen kann, und Mitteln, welche der Greifeinheit Energie liefern können, wobei jede Werkzeugmaschine (12) außerdem zweite Steuermittel (40) aufweist, welche die Steuersignale senden können, wobei Signal-Übertragungsmittel vorgesehen sind, um die Steuersignale zwischen den Steuermitteln (28) der Greifeinheit (10,10') und den zweiten Steuermitteln (40) zu übertragen, wenn die Greifeinheit in die Werkzeugmaschine (12) aufgenommen ist.

20. Vorrichtung nach Anspruch 19, wobei die Lade-/Entladestation (14) dritte Steuermittel (50) aufweist, welche Steuersignale der Greifmittel (18,18a,18b,18') senden können, und die Übertragungsmittel auch Steuersignale der Greifmittel übertragen können, wenn die Greifeinheit (10,10') sich an der Lade-/Entladestation (14) befindet.

21. Vorrichtung nach Anspruch 20, wobei die dritten Steuermittel (50) ein Sichtanzeigemittel und mindestens ein (Daten-) Erfassungsmittel umfassen.

22. Vorrichtung nach einem der Ansprüche 19 bis 21 in Kombination mit Anspruch 8, wobei die Übertragungsmittel außerdem vierte Verbindungsmittel umfassen, die an der Lade-/Entladestation (14) angebracht sind, wobei die ersten und vierten Verbindungsmittel automatisch miteinander verbunden werden, wenn die Greifeinheit (10,10') sich an der Lade-/Entladestation (14) befindet.

23. Vorrichtung nach einem der Ansprüche 19 bis 22, wobei die Mittel, die der Greifeinheit (10,10') Energie liefern können, mindestens eine Energiequelle umfassen, mit der die Werkzeugmaschine (12) ausgerüstet ist, sowie Energie-Übertragungsmittel zwischen der Energiequelle und den Steuermitteln (28) der Greifeinheit (10,10').

24. Vorrichtung nach den Ansprüchen 8 und 23 in Kombination, wobei die ersten und die zweiten Verbindungsmittel (32,34) auch einen Teil der Energie-Übertragungsmittel bilden.

25. Vorrichtung nach einem der Ansprüche 19 bis 24, wobei die Werkzeugmaschine (12) eine Hochgeschwindigkeits-Werkzeugmaschine ist.

26. Vorrichtung nach einem der Ansprüche 19 bis 25, wobei mindestens ein Fördermittel vorgesehen ist, um die Greifeinheit (10,10') zwischen der Werkzeugmaschine (12) und der Lade-/Entladestation (14) zu transportieren.

27. Bearbeitungsverfahren von Teilen mittels einer Vorrichtung gemäß einem der Ansprüche 19 bis 26, mit den folgenden Phasen:
- einer Konzeptionsphase, die darin besteht, die aufeinanderfolgenden Ausrichtungen eines Teils in der Werkzeugmaschine (12) sowie die Bearbeitungsfolgen, die zu jeder dieser Ausrichtungen gehören, festzulegen,
- einer Herstellungsphase mit den folgenden Schritten:
- Anordnen der Greifeinheit (10,10') an der Lade-/Entladestation (14),
- Anordnen der Greifmittel (18,18a,18b,18') an der Greifeinheit (10,10'),
- Positionieren eines Materialblocks (B,B'), der an der Greifeinheit (10,10') zu bearbeiten ist, und Ankoppeln des Blocks durch die Greifmittel (18, 18a, 18b, 18'),
- Übertragen und Anordnen der Greifeinheit (10,10') auf die bzw. an der Werkzeugmaschine (12),
- Ausrichten des Blocks (B,B') in einer ersten von vordefinierten Ausrichtungen unter der Einwirkung der Ausrichtmittel (22,22a,22b), die von den Steuermitteln (28) der Greifeinheit (10,10') auf Anforderung der zweiten Steuermittel (40) gesteuert werden,
- Ausführen der dieser ersten Position entsprechenden Bearbeitungsfolgen,
- Wiederholen der Schritte der Ausrichtung des Blocks und der Ausführung der Bearbeitungsfolgen gemäß der Konzeptionsphase so oft wie nötig bis zur Fertigstellung des Teils,
- Übertragen der Greifeinheit (10,10') zu der Lade-/Entladestation (14),
- Loslösen und Entladen des Teils.

28. Verfahren nach Anspruch 27, wobei die Konzeptionsphase für die Bearbeitung mehrerer identischer Teile gleich ist, und die Herstellungsphase bei der Bearbeitung jedes Teils wiederholt wird.
